# EUROPEAN PATENT SPECIFICATION

(11) **EP 3 542 939 B1**
(45) Date of publication and mention of the grant of the patent: **13.07.2022**
(21) Application number: 17871963.9
(22) Date of filing: 04.09.2017
(51) Int. Cl.: B23D 61/02, B23D 59/02, B23D 61/04

(54) **COMBINED GROOVING BLADE FOR SYNCHRONOUS CUTTING MACHINE WITH HALF-CLOSED WATER COOLING CHANNELS**
KOMBINIERTE KERBKLINGE FÜR SYNCHRONE SCHNEIDMASCHINE MIT HALBGESCHLOSSENEN WASSERKÜHLKANÄLEN
LAME DE RAINURAGE COMBINÉE DESTINÉE À UNE MACHINE DE COUPE SYNCHRONE À CANAUX DE REFROIDISSEMENT PAR EAU SEMI-FERMÉS

(30) Priority: 21.11.2016 CN 201621244762 U
(43) Date of publication of application: 25.09.2019
(73) Proprietor: Wuhan Wan Bang Laser Diamond Tools Co., Ltd, Wuhan, Hubei 430056 (CN)
(72) Inventor: YE, Hongyu, Wuhan Hubei 430056 (CN); XIE, Tao, Wuhan Hubei 430056 (CN); ZHANG, Jianwei, Wuhan Hubei 430056 (CN); PAN, Jiadong, Wuhan Hubei 430056 (CN)
(74) Representative: Zeuner Summerer Stütz
(86) International application number: PCT/CN2017/100321
(87) International publication number: WO 2018/090694

(56) References cited:
- EP-A2- 1 334 790
- EP-A2- 1 334 790
- WO-A1-2012/102657
- CN-A- 104 551 231
- CN-U- 203 228 321
- CN-U- 206 185 240
- CN-Y- 2 344 118
- CN-Y- 201 031 698
- CN-Y- 201 046 593
- DE-A1- 3 708 360
- US-A- 4 333 371

## Description

### FIELD OF THE INVENTION

The invention relates to a field of cutting machine, in particular to a combined grooving blade for synchronous cutting machine with half-closed water cooling channels.

### BACKGROUND OF THE INVENTION

The combined diamond grooving blade is a high-efficiency coaxial rotary synchronous cutting device with multiple grooving blades. However, as heat will affect steel substrate during cutting operation, the rigidity of the substrate is difficult to be ensured, and external watering cannot enter to the inside of slits and the temperature of the steel substrate is increased greatly with the increasing of the diameters of the combined grooving blades and the depth of the slits, the substrate is easily deformed, the cutting efficiency is lowered and the cutting life is reduced. If only the height of the steel substrate is increased to maintain the rigidity of the substrate, the cost of the steel substrate and the power consumption of the device are greatly increased.

Document WO 2012/102657 A1 (D1) discloses a combined grooving blade for synchronous cutting machine with half-closed water cooling channels, wherein the combined grooving blade for synchronous cutting machine with half-closed water cooling channels comprises two outside diamond grooving blades; two internal clamp plates; and one central diamond grooving blade, wherein the two internal clamp plates are arranged on both sides of the central diamond grooving blade, wherein the two outside diamond grooving blades are disposed on outer sides of the two internal clamp plates, wherein the two outside diamond grooving blades, the two internal clamp plates and the central diamond grooving blade are fixed into a whole by fasteners, a plurality of cooling water through holes are uniformly distributed, along the same circumference, on each of the outside diamond grooving blades, cooling water channels are provided on the internal clamp plate and in positions corresponding to the cooling water through holes on the outside diamond grooving blade, the cooling water channels are distributed in the radial direction of the outside diamond grooving blade, the cooling water channels has a graded width, and the width of the cooling water channels close to the center of the outside diamond grooving blade is narrower than the width of the cooling water channels far away from the center of the outside diamond grooving blade, gaps in communication with edges of outer circles of the internal clamp plates are provided on ends of some of the cooling water channels, wherein central holes and positioning holes beside the central holes are provided on the outside diamond grooving blades, the internal clamp plates and the central diamond grooving blade, the sizes and the positions of the central holes and the positioning holes on the outside diamond grooving blade, the internal clamp plates and the central diamond grooving blade correspond with each other, and wherein the outer diameter of the outside diamond grooving blades is the same as the outer diameter of the central diamond grooving blade, and the outer diameter of the internal clamp plates is smaller than the outer diameter of the outside diamond grooving blades.

Thus, with respect to the combined diamond grooving blades with large diameters, the cooling is an essential factor for reducing the cost and improving the efficiency.

### SUMMARY OF THE INVENTION

It is an object of the present invention to provide a combined grooving blade for synchronous cutting machine with half-closed water cooling channels, which has overall good heat dissipation and cooling effect.

This object is achieved in accordance with the present invention of a combined grooving blade for synchronous cutting machine with half-closed water cooling channels, wherein the combined grooving blade for synchronous cutting machine with half-closed water cooling channels comprises two outside diamond grooving blades, two internal clamp plates and one central diamond grooving blade, two internal clamp plates are arranged on both sides of the central diamond grooving blade, two outside diamond grooving blades are disposed on outer sides of the two internal clamp plates, the two outside diamond grooving blades, the two internal clamp plates and the central diamond grooving blade are fixed into a whole by fasteners, a plurality of cooling water through holes are uniformly distributed, along the same circumference, on each of the outside diamond grooving blades, cooling water channels are provided on the internal clamp plate and in positions corresponding to the cooling water through holes on the outside diamond grooving blade, the cooling water channels are distributed in the radial direction of the outside diamond grooving blade, the cooling water channels have a graded width, and the width of the cooling water channels closed to the center of the outside diamond grooving blade is narrower than the width of the cooling water channels far away from the center of the outside diamond grooving blade, gaps in communication with edges of outer circles of the internal clamp plates are provided on ends of some of the cooling water channels.

Furthermore, according to the invention, the cooling water channels with the gaps and the cooling water channels without the gaps are spaced on the internal clamp plate.

Furthermore, according to the invention, the number of the cooling water channels arranged on each internal clamp plate corresponds to the number of the cooling water through holes arranged on the outside diamond grooving blade, eight cooling water through holes are uniformly distributed, along the same circumference, on the outside diamond grooving blades, eight cooling water channels are distributed on the internal clamp plate.

Furthermore, according to the invention, the end of the cooling water channels closed to the center of the outside diamond grooving blade is in a shape of circular arc, and the end of the cooling water channels far away from the center of the outside diamond grooving blade is in a shape of circular arc, the circular arc at the distal end of cooling water channel communicates with the edges of the outer circles of the internal clamp plates along the radial direction of the internal clamp plates via the gaps.

Furthermore, according to the invention, central holes and positioning holes beside the central holes are provided on the outside diamond grooving blades, the internal clamp plates and the central diamond grooving blade, the sizes and the positions of the central holes and the positioning holes on the outside diamond grooving blade, the internal clamp plates and the central diamond grooving blade correspond with each other.

Preferably, the two outside diamond grooving blades, the two internal clamp plates and the central diamond grooving blade are fixed into a whole by the fasteners uniformly distributed along the same circumference.

Preferably, the two outside diamond grooving blades, the two internal clamp plates and the central diamond grooving blade are fixed into a whole by three sets of the fasteners uniformly distributed along the same circumference.

Furthermore, according to the invention, the outer diameter of the outside diamond grooving blades is the same as the outer diameter of the central diamond grooving blade, and the outer diameter of the internal clamp plates is smaller than the outer diameter of the outside diamond grooving blades.

Preferably, a plurality of identical diamond segments are welded on the outer circles of the outside diamond grooving blades and the central diamond grooving blade.

Preferably, the diameter of the combined grooving blade is greater than 600 mm.

The advantages of this invention are as follows. The water can be injected into the cooling water channels of the internal clamp plates via the cooling water through hoes of the outside grooving blades to form connected channels, so that the continuous cooling of the half-closed water cooling channels is fully utilized during the cutting operation, especially when the water cannot be injected into the substrate having deep slits. At the same time, the water flows from the cooling water channels can further cool the diamond segments and the substrate on the circumferences of the grooving blades, provide continuous heat dissipation and cooling to the whole combined grooving blades, maintain the rigidity of the steel substrate, and improve the cutting efficiency and prolong the service life, and thus this invention is particularly suitable for a variety of high-intensity, high-efficiency work applications.

### BRIEF DESCRIPTION OF THE DRAWINGS

FIG. 1 is a structure schematic view of outside diamond grooving blades of a combined grooving blade for synchronous cutting machine with half-closed water cooling channels according to the present invention.
FIG. 2 is a structure schematic view of internal clamp plates of a combined grooving blade for synchronous cutting machine with half-closed water cooling channels according to the present invention.
FIG.3 is a structure schematic view of a central diamond grooving blade of a combined grooving blade for synchronous cutting machine with half-closed water cooling channels according to the present invention.
FIG.4 is a structure schematic view of a combined grooving blade for synchronous cutting machine with half-closed water cooling channels according to the present invention.
FIG.5 is a sectional view of the combined grooving blade for synchronous cutting machine with half-closed water cooling channels along a radial direction of the combined grooving blade for synchronous cutting machine with half-closed water cooling channels shown in FIG.4.

In the figures: outside diamond grooving blade-1, internal clamp plate-2, central diamond grooving blade 3, diamond segment 4, cooling water through hole 5, cooling water channel 6, fastener 7.

### DETAILED DESCRIPTION OF THE EMBODIMENTS

The following describes the implementation of the present invention in detail with reference to the accompanying drawings and the embodiments.

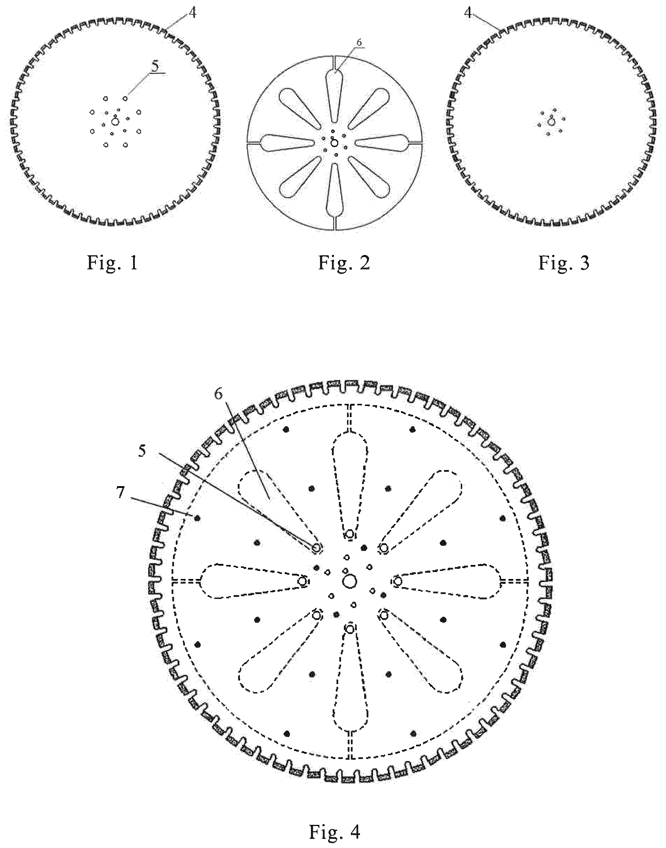

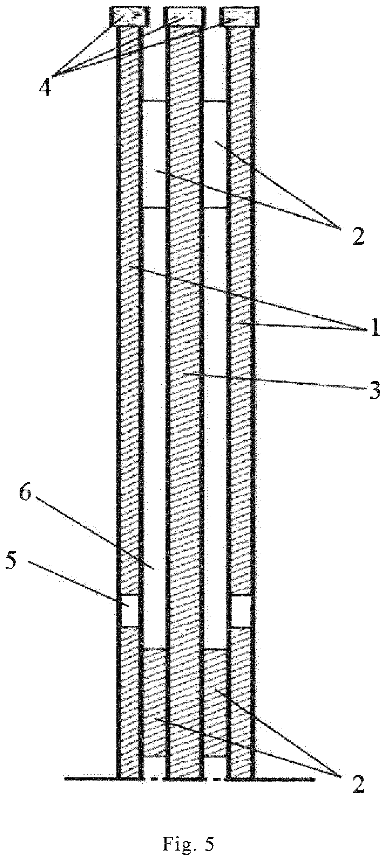

Referring to FIGS. 1-5, a combined grooving blade for synchronous cutting machine with half-closed water cooling channels of the present invention comprises two outside diamond grooving blades 1, two internal clamp plates 2 and one central diamond grooving blade 3. Two internal clamp plates 2 are arranged on both sides of the central diamond grooving blade 3. Two outside diamond grooving blades 1 are arranged on the outsides of two internal clamp plates 2. Those components are fixed into a whole by three sets of fasteners 7 uniformly distributed along the same circumference for forming the combined grooving blades.

The outer diameters of the outside diamond grooving blades 1 are the same as that of the central diamond grooving blade 3. The outer diameters of the internal clamp plates 2 are smaller than that of the outside diamond grooving blades 1 and the central diamond grooving plate 3. The sizes and the positions of central holes of the outside diamond grooving blades 1, the internal clamp plates 2 and the central diamond grooving blade 3 and positioning holes beside the central holes correspond with each other.

Diamond segments 4 having same size are welded on the outer circles of the outside diamond grooving blades 1 and the central diamond grooving blade 3. A plurality of cooling water through holes 5 are uniformly distributed, along the same circumference, on the outside diamond grooving blades 1. As shown in the illustrated embodiment, there are eight cooling water through holes 5 are uniformly distributed, along the same circumference, on the outside diamond grooving blades 1.

Cooling water channels 6 are provided on the internal clamp plates 2 and the arrangement angles of the cooling water channels 6 are the same as that of the cooling water through holes 5 on the outside diamond grooving blades 1. The cooling water channels 6 are distributed along the radial direction of the outside diamond grooving blades 1. The cooling water channel 6 has a graded width. The width of the cooling water channels 6 closed to a center of a circle is narrower than the width of the cooling water channels 6 far away from the center of a circle. The end of the cooling water grooves 6 closed to the center of the outside diamond grooving blade 1 is in a shape of circular arc, and the end of the cooling water grooves 6 far away from the center of the outside diamond grooving blade 1 is in a shape of circular arc. In the cooling water channels 6, gaps in communication with edges of outer circles of the internal clamp plates 2 are provided on the circular arc of the distal end of some of the cooling water grooves 6. The gaps are arranged along the radial direction of the internal clamp plate 2. The cooling water channels 6 with the gaps and the cooling water grooves 6 without the gaps are spaced. The position of the cooling water through holes 5 corresponds to the bottom of the cooling water channels 6 (near the center of a circle). The number of the cooling water channels 6 corresponds to the number of the cooling water through holes 5. As shown in the illustrated embodiment, there are eight cooling water channels 6 distributed on the internal clamp plates 2. Four cooling water channels 6 with gaps and four cooling water channels 6 without gaps are spaced at intervals.

The above-mentioned combined grooving blades are mounted on a coaxial rotary synchronous cutting machine. The cooling water through holes 5 are continuously filled with water and the cooling water channels 6 inside the combined grooved blades are injected with water. A few of water flows in the cooling water channels 6 due to an inertial centrifugal force of rotation. A part of the cooling water channels 6 can be kept closed. The outflowing water flows to the diamond segment 4 and the substrate of the outer circles of the grooved blades.

The structure of the combined grooving blade for synchronous cutting machine with half-closed water cooling channels of the present invention is suitable for the diamond combined grooving blades with a large diameter, and the diameter of the combined grooving blade is greater than 600 mm.

The water can be injected into the cooling water channels of the internal clamp plates via the cooling water through hoes of the outside grooving blades to form connected channels, so that the continuous cooling of the half-closed water cooling channels is fully utilized during the cutting operation, especially when the water cannot be injected into the substrate having deep slits. At the same time, the water flows from the cooling water channels can further cool the diamond segments and the substrate on the circumferences of the grooving blades, provide continuous heat dissipation and cooling to the whole combined grooving blades, maintain the rigidity of the steel substrate, and improve the cutting efficiency and prolong the service life, and thus invention is particularly suitable for a variety of high-intensity, high-efficiency work applications. The above-mentioned embodiments merely describe several embodiments of the present invention, and the description thereof is more specific and detailed. However, it cannot be understood as a limitation on the scope of the present invention. It should be noted that a number of variations and modifications may be made by those persons skilled in the art without departing from the scope of the invention as defined by the claims.

## Claims

1. A combined grooving blade for synchronous cutting machine with half-closed water cooling channels, wherein the combined grooving blade for synchronous cutting machine with half-closed water cooling channels comprises two outside diamond grooving blades (1), two internal clamp plates (2) and one central diamond grooving blade (3), wherein the two internal clamp plates (2) are arranged on both sides of the central diamond grooving blade (3), and the two outside diamond grooving blades (1) are disposed on outer sides of the two internal clamp plates (2), the two outside diamond grooving blades (1), the two internal clamp plates (2) and the central diamond grooving blade (3) are fixed into a hole by fasteners (7), a plurality of cooling water through holes (5) are uniformly distributed, along the same circumference, on each of the outside diamond grooving blades (1), cooling water channels (6) are provided on the internal clamp plate (2) and in positions corresponding to the cooling water through holes (5) on the outside diamond grooving blade (1), the cooling water channels (6) are distributed in the radial direction of the outside diamond grooving blade (1), the cooling water channels (6) has a graded width, and the width of the cooling water channels (6) close to the center of the outside diamond grooving blade (1) is narrower than the width of the cooling water channels (6) far away from the center of the outside diamond grooving blade (1), gaps in communication with edges of outer circles of the internal clamp plates (2) are provided on ends of some of the cooling water channels (6), wherein further
- the cooling water channels (6) with the gaps and the cooling water channels (6) without the gaps are spaced on the internal clamp plate (2),
- the number of the cooling water channels (6) arranged on each internal clamp plate (2) corresponds to the number of the cooling water through holes (5) arranged on the outside diamond grooving blade (1), eight cooling water through holes (5) are uniformly distributed, along the same circumference, on the outside diamond grooving blades (1), eight cooling water channels (6) are distributed on the internal clamp plate (2),
- the end of the cooling water channels (6) close to the center of the outside diamond grooving blade (1) is in a shape of circular arc, and the end of the cooling water channels (6) far away from the center of the outside diamond grooving blade (1) is in a shape of circular arc, the circular arc at the distal end of cooling water channel (6) communicates with the edges of the outer circles of the internal clamp plates (2) along the radial direction of the internal clamp plates (2) via the gaps,
- central holes and positioning holes beside the central holes are provided on the outside diamond grooving blades (1), the internal clamp plates (2) and the central diamond grooving blade (3), the sizes and the positions of the central holes and the positioning holes on the outside diamond grooving blade (1), the internal clamp plates (2) and the central diamond grooving blade (3) correspond with each other, and
- the outer diameter of the outside diamond grooving blades (1) is the same as the outer diameter of the central diamond grooving blade (3), and the outer diameter of the internal clamp plates (2) is smaller than the outer diameter of the outside diamond grooving blades (1).

2. The combined grooving blade for synchronous cutting machine with half-closed water cooling channels according to claim 1, **characterized in that** the two outside diamond grooving blades (1), the two internal clamp plates (2) and the central diamond grooving blade (3) are fixed into a hole by the fasteners (7) uniformly distributed along the same circumference.

3. The combined grooving blade for synchronous cutting machine with half-closed water cooling channels according to claim 2, **characterized in that** the two outside diamond grooving blades (1), the two internal clamp plates (2) and the central diamond grooving blade (3) are fixed into a whole by three sets of the fasteners (7) uniformly distributed along the same circumference.

4. The combined grooving blade for synchronous cutting machine with half-closed water cooling channels according to claim 1, **characterized in that** a plurality of identical diamond segments (4) are welded on the outer circles of the outside diamond grooving blades (1) and the central diamond grooving blade (3).

5. The combined grooving blade for synchronous cutting machine with half-closed water cooling channels according to any one of claims 1 to 4, **characterized in that** the diameter of the combined grooving blade is greater than 600 mm.

## Patentansprüche

1. Kombinierte Kerbklinge für eine synchrone Schneidmaschine mit halbgeschlossenen Wasserkühlkanälen, wobei die kombinierte Kerbklinge für eine synchrone Schneidmaschine mit halbgeschlossenen Wasserkühlkanälen zwei Außendiamant-Kerbklingen (1), zwei interne Klemmplatten (2) und eine mittige Diamant-Kerbklinge (3) umfasst, wobei die zwei internen Klemmplatten (2) auf beiden Seiten der mittigen Diamant-Kerbklinge (3) angeordnet sind und die zwei Außendiamant-Kerbklingen (1) auf Außenseiten der zwei internen Klemmplatten (2) angeordnet sind, wobei die zwei Außendiamant-Kerbklingen (1), die zwei internen Klemmplatten (2) und die mittige Diamant-Kerbklinge (3) durch Befestigungselemente(7) in einem Loch befestigt sind, wobei mehrere Kühlwasser-Durchgangslöcher (5), entlang desselben Umfangs, auf jeder der Außendiamant-Kerbklingen (1) gleichmäßig verteilt sind, wobei Kühlwasserkanäle (6) auf der internen Klemmplatte (2) und in Positionen entsprechend den Kühlwasser-Durchgangslöchern (5) auf der Außendiamant-Kerbklinge (1) vorgesehen sind, wobei die Kühlwasserkanäle (6) in der radialen Richtung der Außendiamant-Kerbklinge (1) verteilt sind, wobei die Kühlwasserkanäle (6) eine abgestufte Breite aufweisen und die Breite der Kühlwasserkanäle (6) nahe der Mitte der Außendiamant-Kerbklinge (1) schmaler ist als die Breite der Kühlwasserkanäle (6) weit entfernt von der Mitte der Außendiamant-Kerbklinge (1), wobei Spalten in Verbindung mit Kanten äußerer Kreise der internen Klemmplatten (2) an Enden einiger der Kühlwasserkanäle (6) vorgesehen sind, wobei ferner
- die Kühlwasserkanäle (6) mit den Spalten und die Kühlwasserkanäle (6) ohne die Spalten auf der internen Klemmplatte (2) beabstandet sind,
- die Anzahl der Kühlwasserkanäle (6), die auf jeder internen Klemmplatte (2) angeordnet sind, der Anzahl der Kühlwasser-Durchgangslöcher (5) entspricht, die auf der Außendiamant-Kerbklinge (1) angeordnet sind, wobei acht Kühlwasser-Durchgangslöcher (5), entlang desselben Umfangs, auf den Außendiamant-Kerbklingen (1) gleichmäßig verteilt sind, wobei acht Kühlwasserkanäle (6) auf der internen Klemmplatte (2) verteilt sind,
- das Ende der Kühlwasserkanäle (6) nahe der Mitte der Außendiamant-Kerbklinge (1) eine Form eines Kreisbogens aufweist und das Ende der Kühlwasserkanäle (6) weit entfernt von der Mitte der Außendiamant-Kerbklinge (1) eine Form eines Kreisbogens aufweist, wobei der Kreisbogen an dem distalen Ende eines Kühlwasserkanals (6) mit den Kanten der äußeren Kreise der internen Klemmplatten (2) entlang der radialen Richtung der internen Klemmplatten (2) über die Spalten in Verbindung steht,
- Mittellöcher und Positionierungslöcher neben den Mittellöchern auf den Außendiamant-Kerbklingen (1), den internen Klemmplatten (2) und der mittigen Diamant-Kerbklinge (3) vorgesehen sind, wobei die Größen und die Positionen der Mittellöcher und der Positionierungslöcher auf der Außendiamant-Kerbklinge (1), den internen Klemmplatten (2) und der mittigen Diamant-Kerbklinge (3) einander entsprechen, und
- der äußere Durchmesser der Außendiamant-Kerbklingen (1) gleich dem äußeren Durchmesser der mittigen Diamant-Kerbklinge (3) ist und der äußere Durchmesser der internen Klemmplatten (2) kleiner ist als der äußere Durchmesser der Außendiamant-Kerbklingen (1).

2. Kombinierte Kerbklinge für eine synchrone Schneidmaschine mit halbgeschlossenen Wasserkühlkanälen nach Anspruch 1, **dadurch gekennzeichnet, dass** die zwei Außendiamant-Kerbklingen (1), die zwei internen Klemmplatten (2) und die mittige Diamant-Kerbklinge (3) durch Befestigungselemente (7), die entlang desselben Umfangs gleichmäßig verteilt sind, in einem Loch befestigt sind.

3. Kombinierte Kerbklinge für eine synchrone Schneidmaschine mit halbgeschlossenen Wasserkühlkanälen nach Anspruch 2, **dadurch gekennzeichnet, dass** die zwei Außendiamant-Kerbklingen (1), die zwei internen Klemmplatten (2) und die mittige Diamant-Kerbklinge (3) durch drei Sätze der Befestigungselemente (7), die entlang desselben Umfangs gleichmäßig verteilt sind, in einem Loch befestigt sind.

4. Kombinierte Kerbklinge für eine synchrone Schneidmaschine mit halbgeschlossenen Wasserkühlkanälen nach Anspruch 1, **dadurch gekennzeichnet, dass** mehrere identische Diamantsegmente (4) auf den äußeren Kreisen der Außendiamant-Kerbklingen (1) und der mittigen Diamant-Kerbklinge (3) geschweißt sind.

5. Kombinierte Kerbklinge für eine synchrone Schneidmaschine mit halbgeschlossenen Wasserkühlkanälen nach einem der Ansprüche 1 bis 4, **dadurch gekennzeichnet, dass** der Durchmesser der kombinierten Kerbklinge größer ist als 600 mm.

## Revendications

1. Lame de rainurage combinée pour une machine de coupe synchrone avec des canaux de refroidissement par eau semi-fermés, dans lequel la lame de rainurage combinée pour une machine de coupe synchrone avec des canaux de refroidissement par eau semi-fermés comprend deux lames de rainurage diamantées extérieures (1), deux plaques de serrage intérieures (2) et un lame de rainurage diamantée centrale (3), dans lequel les deux plaques de serrage intérieures (2) sont agencées de part et d'autre de la lame de rainurage diamantée centrale (3), et les deux lames de rainurage diamantées extérieures (1) sont disposées sur des côtés extérieurs des deux plaques de serrage intérieures (2), les deux lames de rainurage diamantées extérieures (1), les deux plaques de serrage intérieures (2) et la lame de rainurage diamantée centrale (3) sont fixées dans un trou par des moyens de fixation (7), une pluralité de trous de passage d'eau de refroidissement (5) sont répartis uniformément le long de la même circonférence, sur chacune des lames de rainurage diamantées extérieures (1), des canaux d'eau de refroidissement (6) sont prévus sur la plaque de serrage intérieure (2) et à des positions correspondant aux trous de passage d'eau de refroidissement (5) sur la lame de rainurage diamantée extérieure (1), les canaux d'eau de refroidissement (6) sont répartis dans la direction radiale de la lame de rainurage diamantée extérieure (1), les canaux d'eau de refroidissement (6) présentent une largeur nivelée, et la largeur des canaux d'eau de refroidissement (6) à proximité du centre de la lame de rainurage diamantée extérieure (1) est plus étroite que la largeur des canaux d'eau de refroidissement (6) à grande distance du centre de la lame de rainurage diamantée extérieure (1), des espacements en communication avec des bords de cercles extérieurs des plaques de serrage intérieures (2) sont prévus à des extrémités de certains des canaux d'eau de refroidissement (6), dans lequel, en outre,
- les canaux d'eau de refroidissement (6) avec les espacements et les canaux d'eau de refroidissement (6) sans les espacements sont espacés sur la plaque de serrage intérieure (2),
- le nombre de canaux d'eau de refroidissement (6) agencés sur chaque plaque de serrage intérieure (2) correspond au nombre de trous de passage d'eau de refroidissement (5) agencés sur la lame de rainurage diamantée extérieure (1), huit trous de passage d'eau de refroidissement (5) sont répartis uniformément, le long de la même circonférence, sur les lames de rainurage diamantées extérieures (1), huit canaux d'eau de refroidissement (6) sont répartis sur la plaque de serrage intérieure (2),
- l'extrémité des canaux d'eau de refroidissement (6) à proximité du centre de la lame de rainurage diamantée extérieure (1) présente une forme d'arc de cercle, et l'extrémité des canaux d'eau de refroidissement (6) à grande distance du centre de la lame de rainurage diamantée extérieure (1) présente une forme d'arc de cercle, l'arc de cercle à l'extrémité distale du canal d'eau de refroidissement (6) communique avec les bords des cercles extérieurs des plaques de serrage intérieures (2) le long de la direction radiale des plaques de serrage intérieures (2) par le biais des espacements,
- des trous centraux et des trous de positionnement adjacents aux trous centraux sont prévus sur les lames de rainurage diamantées extérieures (1), les plaques de serrage intérieures (2) et la lame de rainurage diamantée centrale (3), les tailles et les positions des trous centraux et des trous de positionnement sur la lame de rainurage diamantée extérieure (1), les plaques de serrage intérieures (2) et la lame de rainurage diamantée centrale (3) correspondent les uns aux autres, et
- le diamètre extérieur des lames de rainurage diamantées extérieures (1) est identique au diamètre extérieur de la lame de rainurage diamantée centrale (3), et le diamètre extérieur des plaques de serrage intérieures (2) est inférieur au diamètre extérieur des lames de rainurage diamantées extérieures (1).

2. Lame de rainurage combinée pour une machine de coupe synchrone avec des canaux de refroidissement par eau semi-fermés selon la revendication 1, **caractérisé en ce que** les deux lames de rainurage diamantées extérieures (1), les deux plaques de serrage intérieures (2) et la lame de rainurage diamantée centrale (3) sont fixées dans un trou par les moyens de fixation (7) répartis uniformément le long de la même circonférence.

3. Lame de rainurage combinée pour une machine de coupe synchrone avec des canaux de refroidissement par eau semi-fermés selon la revendication 2, **caractérisé en ce que** les deux lames de rainurage diamantées extérieures (1), les deux plaques de serrage intérieures (2) et la lame de rainurage diamantée centrale (3) sont fixées dans un trou par trois ensembles de moyens de fixation (7) répartis uniformément le long de la même circonférence.

4. Lame de rainurage combinée pour une machine de coupe synchrone avec des canaux de refroidissement par eau semi-fermés selon la revendication 1, **caractérisé en ce qu'**une pluralité de segments diamantés (4) identiques sont soudés sur les cercles extérieurs des lames de rainurage diamantées extérieures (1) et de la lame de rainurage diamantée centrale (3).

5. Lame de rainurage combinée pour une machine de coupe synchrone avec des canaux de refroidissement par eau semi-fermés selon l'une quelconque des revendications 1 à 4, **caractérisé en ce que** le diamètre de la lame de rainurage combinée est supérieur à 600 mm.
